# EUROPEAN PATENT SPECIFICATION

(11) **EP 4 362 668 B1**
(45) Date of publication and mention of the grant of the patent: **30.04.2025**
(21) Application number: 22741587.4
(22) Date of filing: 23.06.2022
(51) Int. Cl.: A01K 29/00, G06Q 50/02

(54) **SYSTEM FOR DETERMINING A TIME DISTRIBUTION OF AN ANIMAL INTO ZONES OF A BARN**
SYSTEM ZUR BESTIMMUNG DER ZEITLICHEN VERTEILUNG EINES TIERES IN ZONEN EINES STALLS
SYSTÈME POUR DÉTERMINER LA RÉPARTITION TEMPORELLE D'UN ANIMAL DANS LES ZONES D'UNE ÉTABLE

(30) Priority: 01.07.2021 SE 2130184
(43) Date of publication of application: 08.05.2024
(73) Proprietor: DeLaval Holding AB, 147 21 Tumba (SE)
(72) Inventor: BAHLENBERG, Peter, 147 21 Tumba (SE)
(74) Representative: DeLaval International AB
(86) International application number: PCT/SE2022/050629
(87) International publication number: WO 2023/277766

(56) References cited:
- WO-A1-2009/011641
- WO-A1-2014/042519
- FR-A1- 3 067 218
- KR-A- 20190 047 397
- SE-A1- 1 800 203
- US-A1- 2012 239 303
- US-A1- 2015 293 205
- US-A1- 2020 137 984
- MELZER N. ET AL: "Validation of a real-time location system for zone assignment and neighbor detection in dairy cow groups", COMPUTERS AND ELECTRONICS IN AGRICULTURE, vol. 187, no. 106280, 22 June 2021 (2021-06-22), AMSTERDAM, NL, pages 1 - 16, XP055944645, ISSN: 0168-1699, DOI: 10.1016/j.compag.2021.106280
- BENAISSA S ET AL: "Calving and estrus detection in dairy cattle using a combination of indoor localization and accelerometer sensors", COMPUTERS AND ELECTRONICS IN AGRICULTURE, ELSEVIER, AMSTERDAM, NL, vol. 168, 18 December 2019 (2019-12-18), XP085973122, ISSN: 0168-1699, [retrieved on 20191218], DOI: 10.1016/J.COMPAG.2019.105153

## Description

The invention relates to a system for determining distribution of time that an animal has spent in different zones of an agricultural indoor environment such as a barn for cows, during a predetermined time period.

Dairy farms often comprise automatic milking systems, allowing the animals to stroll around freely in a dwelling area and may visit an automatic milking equipment, such as a milking robot, rotating milking parlour, etc., for milking. The animals may then voluntarily go and visit the automatic milking equipment for being milked, tempted by nutrition offered at the automatic milking equipment, and/ or sorted out by a gate in a forced animal traffic layout in the barn. This is sometimes also referred to as a voluntary milking system, or just robotic milking.

Herds of animals are becoming bigger and bigger. It may become a challenge for the farmer to detect an exception animal, like animals predicted to be in heat (for performing insemination); as well as sick or injured animals or animals with an otherwise abnormal state or behaviour. Several attempts have been made to find solutions for this purpose, for example based on measurement and analysis of milk yield, rumination, milk composition, hormones, etc., of the respective animal. However, they all have their limitations. It may for this reason be desired to find another methodology to identify the exception animal, to be utilised alone, or in combination with other measurements.

Real-Time Location Systems (RTLS) have emerged to enable location of animals indoors, for example in the barn. The animal is provided with a tag comprising a radio transmitter transmitting radio signals, or blinks. These radio signals of the tag are received by receivers, or anchors as they also may be referred to, which are positioned at different known positions in the barn. The receivers may determine direction, angle of arrival and/ or time delay of the received signals and forward this information to a positioning controller, which is calculating a set of position coordinates of the animal based on one or more signal locating algorithms, such as trilateration, multilateration, and/ or triangulation of the radio signals of the tag/ radio transmitter, as received by the respective receivers.

The current position of the animal may thereby be determined. However, various problems are associated with RTLS. The mere fact of being able to detect the current position of the animals within the barn does not help much in determining current animal status.

FR 3 067 218 A1 discloses a method for identification of a piece of equipment or a driveway to be fitted out or moved in a barn, or of an individual in a group of cattle to be dehorned, involving processing set of measurements and identifying traveling track of animal based on frequentation of animal.

It is an object of the present invention to enable a simulation of the farmer's daily animal surveillance and close contact with the herd and enable detection of an exception animal. This object is achieved by a system according to claim 1. In particular, the system aims at determining distribution of time that a respective animal has spent in different zones of a barn during a predetermined time period. The zones are dedicated for a respective activity comprising a feeding zone dedicated for eating, a resting zone dedicated for resting and a transportation zone dedicated for walking. By determining time distribution that the animal has spent in different zones, it is indirectly also determined a distribution of activities performed by the animal.

The system comprises a processing controller and a database. The database is configured to store position coordinates of the respective zones of the barn. The system also comprises a positioning controller and a set of tags, wherein each tag is associated with the respective animal. Each tag comprises a processing device, a radio transmitter and a memory. The memory stores a tag identity i.e., a code which is uniquely identifying the tag. The tag is in turn associated with an animal identity of the animal associated with/ carrying the tag, for example in a look-up table or in the database. The processing device is configured to transmit a radio signal via the radio transmitter, repeatedly at a regular time interval; wherein each radio signal comprises the tag identity.

The regular time interval between radio signal transmissions may be for example about every 2.2 seconds. Other regular time intervals such as every 2 seconds, every 3 seconds, etc., may be applied in other embodiments.

The system also comprises at least three receivers, positioned at a respective predetermined position in the barn. The receivers, or anchors, are each one configured to receive the transmitted radio signals and communicate information related to the received radio signals with the positioning controller. The communicated information may comprise for example a measured angle of arrival of the received signal, a measured signal strength of the received signal and/ or a time of arrival/ delay time of the received signal.

The positioning controller is configured to repeatedly obtain the information related to the received radio signals, received from the respective receivers. The positioning controller then, for each tag identity calculates a set of position coordinates of the tag comprising the respective tag identity based on the information related to the received radio signals of the radio transmitter received by the receivers. The positioning controller is also configured to provide data entities, each data entity comprising the calculated position coordinates of the tag associated with a timestamp and/ or an index number to the processing controller.

The processing controller is configured to determine distribution of time that an animal associated with the tag comprising the tag identity has spent in different zones of the barn by associating each obtained data entity with a respective zone based on the position coordinates of the respective information entity and the position coordinates of the zones. Then, the number of data entities in each respective zone are counted and a calculation is made, concerning amount of time the animal has spent in each respective zone by multiplying the number of data entities associated with each respective zone with the regular time interval, such as for example 2.2 seconds.

Thereby, a distribution of time the animal spends in each respective zone, and thereby also indirectly an approximation of the activity performed by the animal during the predetermined time period is determined. As most animals are reliable creatures of habit, a deviation from a normality behaviour could immediately be detected by the farmer. The farmer is at an early stage enabled to detect a deviating animal behaviour, for example by comparing current distribution of time in the different zone, with an expected/ average distribution of time. The farmer could at an early stage implement executive decisions concerning appropriate measures, depending on the kind of deviations, such as for example apply insemination when heat is indicated due to excess walking/ activity, i.e. when the animal spends more time than average/ expected in a transportation zone of the barn. The farmer is also enabled to make visual health inspection for the particular animal when walking activity is low and/ or resting time is high and/ or eating time is low. Thereby, competent veterinarian assistance could be applied at a very early stage, eliminating, minimising or at least reducing time in a deviating state of the animal, and thereby also suffering of the animal while increasing milk yield of the farm.

In case the animal spends too little time eating at the eating zone of the barn, the reason may be that the animal is low ranked and may never/ seldom be able to access the fodder table, which may require change of fodder group for the particular animal, etc.

In some embodiments, the database comprises historical distribution of time that the respective animal has spent in different zones of the barn. The determined distribution of time that the animal has spent in different zones may be compared with historical distribution of time that the animal has spent in these zones, extracted from the database. In case the deviation between the determined distribution of time and the historical distribution of time of the animal exceeds a threshold limit, an alert may be generated based on the made comparison. Also, the determined distribution of time that the animal has spent in the different zones may be stored in the database, thereby forming part of future reference distribution of time of the animal.

Deviations between the current time distribution between different zones/ activities and historical time distribution could thereby be detected automatically and the farmer could instantly be alerted for taking appropriate measures.

The historical distribution of time that the respective animal has spent in different zones of the barn may be stored in the database associated with a time of the day when the distribution was determined. The processing controller may then be configured to determine the time of the day when the distribution of time that the animal has spent in different zones is determined using a clock functionality and make the comparison with historical distribution of time the animal at the corresponding time of the day.

The animals will behave differently at different times of the day, and for example be resting more at night-time while being more active at daytime. By storing and comparing time distribution made at the same time of the day, it is assured that a relevant comparison is made. Another advantage by determining the time of the day when determining the animal position/ activity is that a change in behaviour over time of an animal could be detected, which may relate to animal status and condition, which may impact milk yield.

The processing controller may also define a cluster of obtained data entities having position coordinates within a distance limit and a timestamp and/ or index number within a time limit. Position coordinates of a gravity point of the defined cluster may then be calculated. Also, the zone the position coordinates of the gravity point is associated with is determined. In addition, the processing controller may determine that all data entities of the cluster are associated with the zone of the cluster gravity point.

The positioning of an animal/ tag standing close to a border between two zones may swap between the zones although the animal in reality may move only within the same zone, or not be moving at all. The reason is for example signal interference, reflections of radio signals against different objects in the barn, for example. By defining clusters and categorise all data entities of the cluster into the zone of the coordinates of the gravity point, a more reliable zone categorisation may be made.

The processing controller may additionally be configured to determine zone association of the respective data entity by applying a rolling average of the position coordinates of the preceding data entities within a predetermined window length and associating all data entities within the predetermined window length with the same zone.

Hereby another, or additional solution providing enhanced zone determination of the tag/ animal is achieved, which may be important in particular when the animal is situated close to a zone border.

The tag comprises an accelerometer. The accelerometer determines movement data of the animal, or rather the body part wherein the tag/ accelerometer is attached. Each data entity thereby comprises accelerometer data of the accelerometer. The processing controller is also configured to detect that the animal is ruminating at position coordinates of any one of the obtained data entities, based on analysis of the accelerometer data of the data entity. In case the position coordinates of the data entity are situated close to a limitation/ border of the resting zone associating the data entity of the animal with the resting zone when rumination is detected.

A typical behaviour of at least some animals such as cows, is that they are ruminating fodder several times, typically while they are resting in a resting cubicle. Thus, when an animal is situated close to the border between the resting zone and any other zone, the animal may be considered located in the resting zone, as concluded based on accelerometer detections of the rumination of the animal.

In some embodiments, the processing controller may be configured to compare the calculated time the animal has spent in the transportation zone with a heat time threshold limit and generate a heat alert for the animal when the heat time threshold limit is exceeded. The heat time threshold limit may be individually adapted to the particular animal, or alternatively comprise a general/ average value.

The farmer is thereby enabled to detect heat of the animal at an early stage, which is important for successful insemination, which in turn is important for the milk yield at the farm. The processing controller may also, or alternatively be configured to compare the time the animal has spent in the resting zone with a passivity time threshold limit, and generate an anomaly alert for the animal when the passivity time threshold limit is exceeded. The passivity time threshold limit may be individually adapted to the particular animal, or alternatively comprise a general value.

The farmer is thereby enabled to detect an animal which is sick or hurt at an early stage and is thereby also enabled to apply appropriate solutions (medications, veterinary visit, etc.), thereby shortening and/ or eliminating down time of the animal, which enhances milk production.

The radio transmitter of the tags may be configured to transmit a radio signal in an Ultra-Wide Band (UWB), which is an appropriate radio technology for indoor positioning.

At least one of the zones of the barn may in alternatives be divided into sub-zones. The sub- zones of a resting zone may be a number of cubicles, the sub- zones of a feeding zone may comprise feeding stations, for example. The processing controller may be configured to compile the calculated amount of time each animal has spent in each sub-zone. Also, the processing controller may detect a sub-zone which is used less than a threshold time, based on the compilation.

By dividing one or several zones into sub-zones, and determining the animal positioning at a sub-zone level, it could be determined for example whether the animal dislike certain sections of the barn; and/ or whether there are sections of the barn that all animals avoid. The farmer may then be recommended to inspect the section in question to figure out why the section is avoided. It may be a cubicle which is perceived as uncomfortable by the animals for example. The farmer may then implement different solutions (better bedding on the floor, improved ventilation,...) and follow up the animal utilisation of the zones/ sub-zones of the barn, an optimal utilisation of the barn area may be obtained. It may even be possible to add more animals to the farm, thereby increasing milk yield of the farm.

The system may in addition also comprise an output device, such as a computer, portable communication device, a computer tablet, etc., of the farmer. The processing controller may be configured to output information concerning distribution of time that the animal has spent in different zones of the barn on the output device. In yet some embodiments, the processing controller may be configured to output the generated alert on the output device.

The farmer is consequently provided with information and alerts for continuous monitoring of the herd and is enabled to detect behaviour deviations of an animal at an early stage.

### Figures

The invention will subsequently be explained further with reference to non-limiting embodiments, as schematically shown and described in the appended drawings, in which:
- Figure 1: illustrates an example of a barn interior comprising a system, according to an embodiment of the invention;
- Figure 2: illustrates an overview image of a barn according to an embodiment;
- Figure 3: illustrates a virtual map of the barn according to an embodiment;
- Figure 4A-F: illustrates a track sequence of information entities in a virtual map of the barn according to different embodiments;
- Figure 5: illustrates a tag comprising various entities in an embodiment.

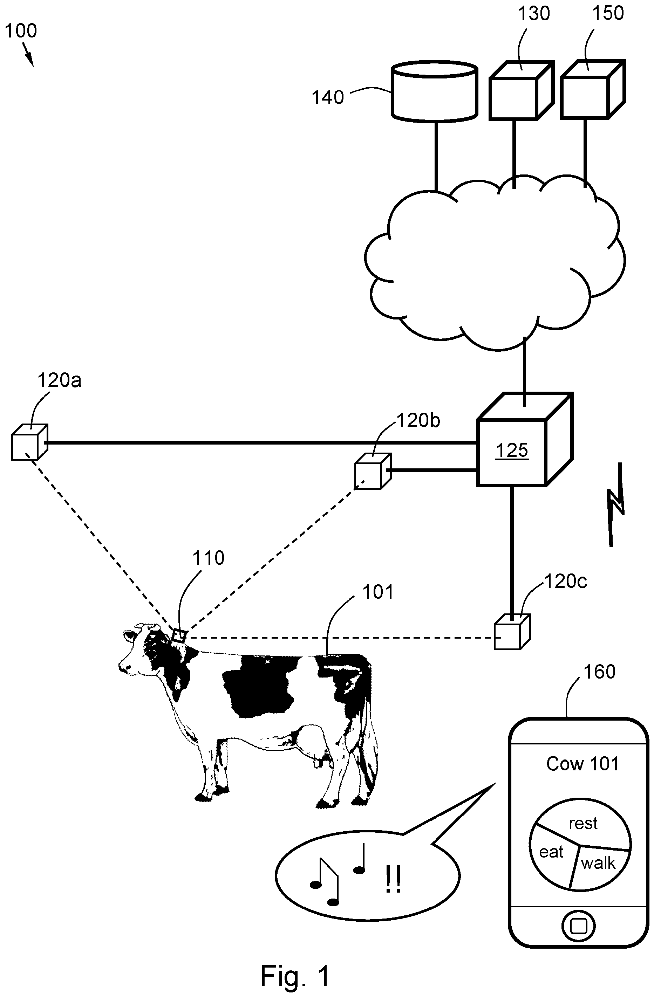

Figure 1 is an illustration depicting an example of a barn interior comprising a system 100, according to an embodiment of the invention. An animal 101 is associated with a tag 110, comprising a radio transmitter which repeatedly, for example at a regular time interval is transmitting a radio signal, or blink; for example, about every 2.2 seconds in some examples. The regular time interval may be set to another time interval, for example parts of a second, every second, every 3 seconds, etc.

The animal 101 may be a cow as illustrated in Figure 1, but may in other examples be any arbitrary domesticated animal, such as for example bull, horse, goat, sheep, camel, dairy buffalo, yak, etc.

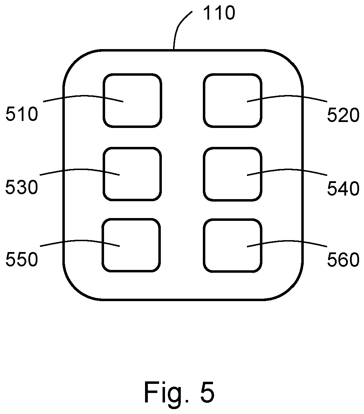

The tag 110 is attached to a body part of the animal 101, such as around the neck or pierced in one of the ears of the animal 101, or possibly any other body part. The tag 110 may have a memory which may comprise data which is uniquely identifying the tag and/ or the animal 101, i.e. an identity reference such as a locally or globally unique number, name, and/ or code, etc. Details of the tag 110 and various components comprised therein are illustrated in Figure 5 and discussed in the corresponding section of the description.

The transmitter of the tag 110 emits wireless signals which may be received by a positioning controller 130 via a number of receivers 120a, 120b, 120c, such as typically at least three receivers 120a, 120b, 120c. These receivers 120a, 120b, 120c, or anchors, are mounted in the barn at predetermined, known positions, which are distinct from each other.

The wireless signals may be transmitted between the transmitter of the tag 110 and the wireless signal receivers 120a, 120b, 120c via any convenient wireless communication technology such as Ultra-Wide Band (UWB), Bluetooth (BT), Wireless Universal Serial Bus (Wireless USB), Radio-Frequency Identification (RFID), Wi-Fi, etc.; hereby the location of the tag 110, and thereby indirectly of the animal 101 associated with the tag 110 may be determined.

Wireless signalling based on UWB may provide certain advantages and a more detailed positioning of the tag 110/ animal 101 may be made, in comparison with alternative radio band solutions.

Upon repeatedly receiving the data related to the received radio signals, received from the respective receivers 120a, 120b, 120c, possibly via a gateway 125, the positioning controller 130 is configured to, based on the tag identity, calculate a set of position coordinates of the tag 110 comprising the tag identity based on the information related to the received radio signals of the radio transmitter 110 received by the receivers 120a, 120b, 120c.

The positioning controller 130 may determine position of the tag 110, based on signals emitted by the tag 110. The position of the tag 110 (and thereby also of the associated animal 101) may be made e.g. via triangulation or trilateration in at least two directions, e.g. two perpendicular directions such as X and Y. In some embodiments, the position of the tag 110 may also be determined in Z direction.

Each data entity composed by the positioning controller 130 may comprise, or at least be configured to comprise, a timestamp, a tag identity, a blink index number, an X coordinate, an Y coordinate, a Z coordinate, and/ or accelerometer data.

In an ideal situation, the receivers 120a, 120b, 120c may receive every blink of the tag 110, thereby enabling the positioning controller 130 to continuously determine the position of the tag 110. However, a blink may not be received by one, some or all of the receivers 120a, 120b, 120c, thereby producing a gap in the series of blinks.

Sometimes, the received blink may be distorted or disturbed by interference with other signals or signal reflections by obstacles in the barn, which affect positioning of the tag 110/ animal 101.

The positioning controller 130 is configured to provide data entities, each data entity comprising the calculated position coordinates of the tag 110 comprising the tag identity, associated with a timestamp and/ or an index number to a processing controller 150 and/ or a database 140.

The computational functions of the provided system 100 has in the illustrated example been divided between one positioning controller 130 and one processing controller 150, which are physically separated both from each other and from the farm. In other embodiments however, the computational functions of both the positioning controller 130 and the processing controller 150 may be performed by one single controller, which may be situated at the farm, or remotely therefrom while communicationally connected. In yet other embodiments, the described computing functions of the positioning controller 130 and the processing controller 150 may be sub divided into additional controllers, which may be communicationally connected with each other, thereby enabled to perform the computations of the system 100.

The processing controller 150 and/ or the database 140 may be remotely situated in relation to the farm, connected to the positioning controller 130/ RTLS via a wired or wireless network in some embodiments. Thereby, data processing, calculations and data storage may be made centrally, which saves resources and spare the farmer from data maintenance, software updates, etc.

Alternatively, the processing controller 150 and/ or the database 140 may be locally situated at the farm. Thereby a solution is achieved, which is independent in relation to network connection functionality.

The collected data may thereby be obtained and analysed by the processing controller 150, for example by sorting the obtained data entities in order of sampling based on index number and/ or timestamp during a predetermined time period, associated with the same animal 101. A lost data entity, or data entity comprising no, or incomplete data may thereby be detected.

Data entities not comprising position coordinates (X/ Y and possibly Z), or at least not complete position coordinates may be eliminated.

In an example, analysis of the obtained data entities may result in filtering and removal of outlier positions.

In case there is a gap of one or some few data entities, an interpolation may be made based on the preceding and the subsequent data entities; or possibly an extrapolation based on the preceding data entities.

The processing controller 150 may then determine distribution of time that the animal 101 has spent in different zones of the barn.

The system 100 may comprise an output device 160, for example a portable/ stationary display of the farmer. Information concerning distribution of time that the animal 101 has spent in different zones of the barn, and/ or various alerts may be output, catching the farmers attention to the most anxious animal behaviour detected.

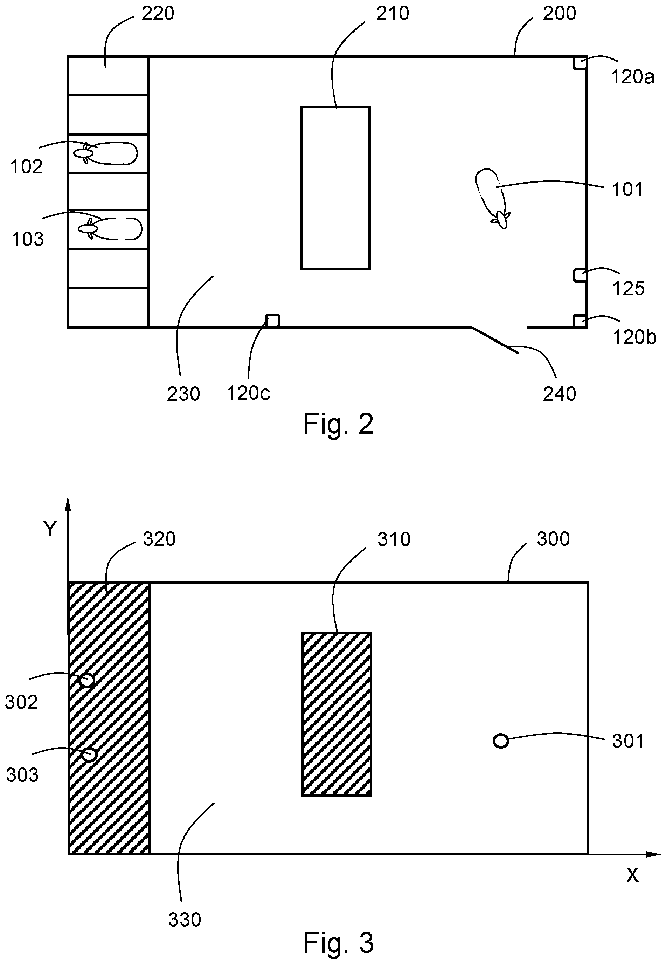

Figure 2 illustrates an overview of a barn 200 in a possible embodiment, wherein the signal receivers 120a, 120b, 120c may be situated, for receiving radio signals transmitted by the tag 110 of the respective animals 101, 102, 103.

The barn 200 may comprise various zones dedicated for different purposes, such as for example a feed table 210 for eating, cubicles 220 for resting, and a walking zone 230 for transportation and strolling around and socialising. In this case, the barn also has a door 240, where the animals 101, 102, 103 may exit the barn 200, for example to a meadow field, for outdoor recreation. It may be estimated how long time the animal 101, 102, 103 spend outside by assuming the animal 101, 102, 103 exits the barn 200 when no more radio signalling is received from his/ her tag 110, after having been located close to the door 240, and correspondingly assuming returning to the barn 200 when reappearing at the door 240.

In other barns 200, there may be a water dispenser zone, a brush zone, a milking robot zone, a waiting zone for accessing the milking robot, a milking zone, multiple entrances/ exit zones, etc.

Figure 3 illustrates a virtual representation 300 of the barn 200 comprising sets of position coordinates 310, 320, 330, corresponding to the position coordinates of the respective zones 210, 220, 230 of the barn 200.

The current position of the respective animal 101, 102, 103 may be represented by a respective data entity 301, 302, 303 comprising an X and a Y coordinate each, besides other data as already mentioned.

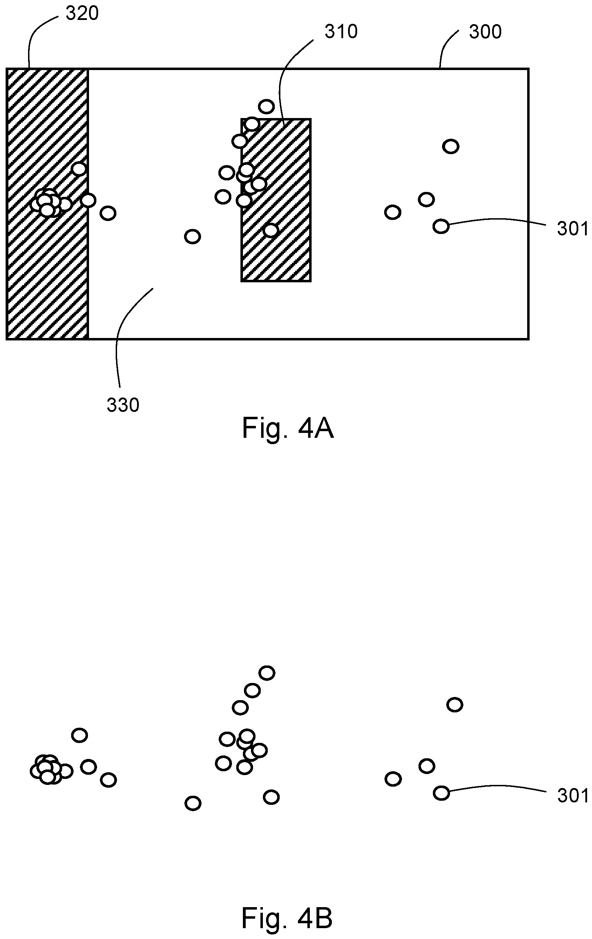

Figure 4A schematically illustrates data entities 301 of one particular animal 101, which have been captured during a predetermined time period, for example about 10-20 minutes, some hours, or some other user defined time period.

It is desired to determine the distribution of time that the animal 101 has spent in different zones 210, 220, 230 of the barn 200 during the predetermined time period.

Figure 4B schematically illustrates data entities 301 of one particular animal 101 during the predetermined time period. By sorting the data entities 301 in order of sampling, based on index number, and/ or timestamp, a lost data entity 301 may be detected and replaced by interpolation/ extrapolation of the surrounding/ preceding data entities.

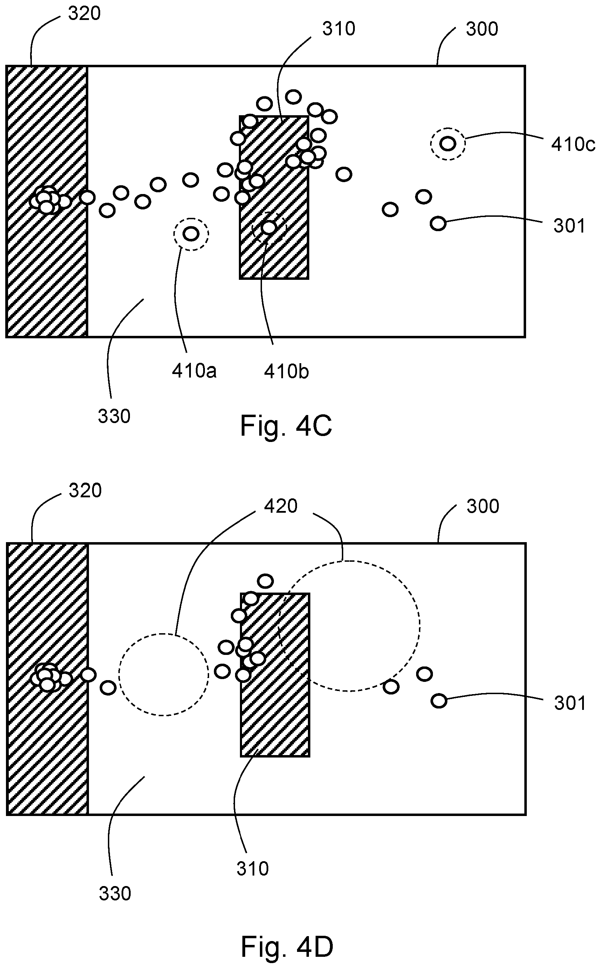

Figure 4C schematically illustrates an example of data entities 301, wherein outlier data entities 410a, 410b, 410c are filtered out and deleted according to some different principles or methodologies.

Due to reflections of radio waves, signal interference between tags 110 of different but closely positioned animals 101, 102, 103, etc., some data entities 301 may comprise position coordinates which are incorrect in relation to the actual position of the animal 101. The signalling may also be at least temporarily affected by various machines etc., temporarily placed or moving around in the barn.

Thus, signals may be lost, and/ or alternatively comprise incomplete information for enabling positioning of the animal 101, 102, 103 at the moment of the transmitted signal. In case only one single signal or possibly some few signals are lost and/ or comprises incomplete data, the data entity 301 may be positioned by inserting an interpolated/ extrapolated value.

The identification and removal of the most obvious outliers 410a, 410b, 410c due to reflections etc., may be an iterative process, based on velocity calculations of animal velocity between successive data entities 301.

An algorithm for calculating the animal velocity may comprise firstly calculating dx, dy and dt for all data entities 301 and then calculate: v = sqrt (dx² + dy²) / dt.

Thereafter, the position having the highest velocity may be deleted, and the velocities for the remaining data entities 301 in the array 400 may be recalculated, as long as the maximum velocity > 2000 mm/s (2 m/s or 7.2 km/h), when the animal 101 is a cow. Other animals may have other velocity threshold limits.

Based on velocity distributions from these computations, it may be assumed to be very unlikely that a cow moves faster than 2 m/s, why data entities 301 involving a faster velocity than 2 m/s may be deleted. Sometimes also the data entity 301 before the one having a large velocity may be removed.

It may be assumed that the animal 101 was close to the positions of the data entities 301 before and after a lost or incomplete data entity.

For a sequence of lost or incomplete data entities 301, as illustrated in Figure 4D, the whereabouts of the animal 101 becomes somewhat more uncertain, and the animal position and distribution of time in different zones 210, 220, 230 may be reconstructed.

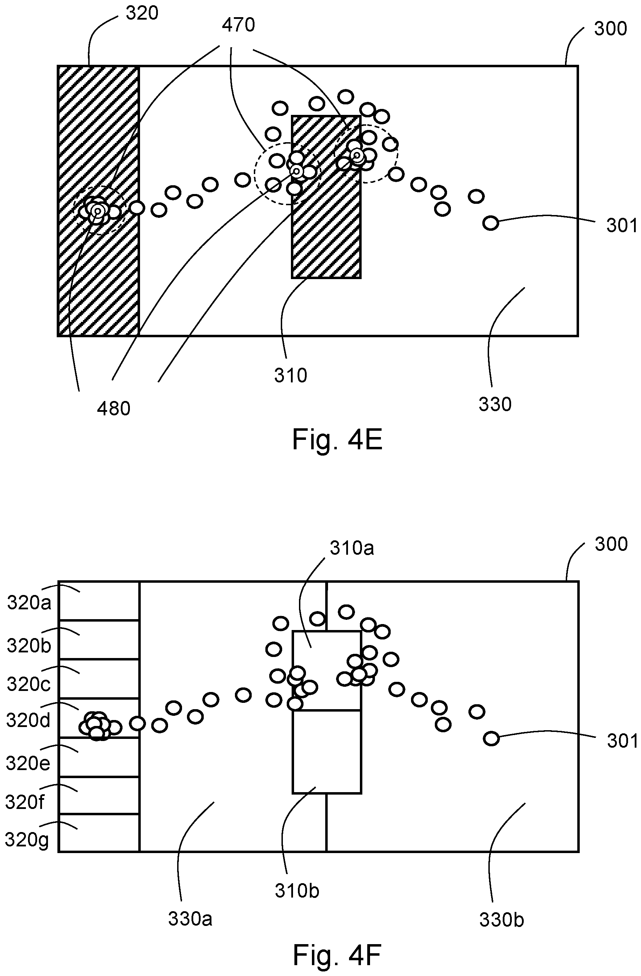

Figure 4E illustrates an example of determining position of the animal 101 and determining distribution of time that the animal 101 has spent in different zones 210, 220, 230 of the barn 200.

The processing controller 150 may in some embodiments define and compose clusters 470 of data entities 301 obtained from the positioning controller 130, having position coordinates within a distance limit and a timestamp and/ or index number within a time limit.

Then, a gravity point 480 of the defined cluster 470 may be determined and position coordinates of the gravity point 480 may be calculated. Furthermore, it may be determined which zone 210, 220, 230 the position coordinates of the gravity point 480 is associated with. In addition, the processing controller 150 may determine that all data entities 301 of the cluster 470 are associated with the zone 210, 220, 230 of the cluster gravity point 480.

Hereby fluctuation of position coordinates of the animal 101 is evened out, which is in particular an advantage when the animal 101 is situated close to a border between two distinct zones 210, 220, 230.

Figure 4F illustrates an embodiment wherein the zones 210, 220, 230, or at least one of the zones 210, 220, 230 may be divided into sub-zones 310a, 310b, 320a, 320b, 320c, 320d, 320e, 320f, 320g, 330a, 330b. The sub-zones 310a, 310b, 320a, 320b, 320c, 320d, 320e, 320f, 320g, 330a, 330b may for example comprise cubicles and/ or feeding stations. Possibly, the transportation zone 230 may be divided into different sections.

Figure 5 illustrates a tag 110, as carried or associated with the animal 101. The tag 110 comprises a processing device 510, a radio transmitter 520 and a memory 530. The memory 530 stores a tag identity unique for the tag 110. The processing device 510 is configured to transmit a radio signal, or blinks, via the radio transmitter 520, repeatedly at a regular time interval such as every 2.2 seconds or there about. Each radio signal comprises the tag identity. The transmitted radio signals may be a radio signal in an Ultra-Wide Band, in an example.

The tag 110 may in some optional embodiments also comprise a device 540 for determining activity of the animal 101, such as e.g. one or several 3-Dimensional (3D) accelerometer, a giro, inertia sensor, etc.

The optional 3D accelerometer 540 of the tag 110 may perform high frequency recordings of bi-axial and/ or tri-axial acceleration, which allows for discrimination of behavioural patterns like determining whether the animal 101 is ruminating for example.

The memory 530, stores a tag identity and/ or identity reference of the animal 101.

The tag 110 may in some embodiments comprise a receiver 550, configured to receive radio signals. Other entities such as for example the positioning controller 130 and/ or the processing controller 150 may communicate commands via a respective associated transmitter, for example to trigger the tag 110 to transmit a signal.

The tag 110 may also comprise an energy source 560, such as a battery, providing energy to the other enumerated entities comprised in the tag 110.

## Claims

1. A system (100) for determining distribution of time that a respective animal (101, 102, 103) has spent in different zones (210, 220, 230) of a barn (200) during a predetermined time period, wherein the system (100) comprises:
a processing controller (150);
a database (140), comprising position coordinates of the respective zones (210, 220, 230);
a positioning controller (130);
a set of tags (110), each tag (110) associated with the respective animal (101, 102, 103), wherein each tag (110) comprises a processing device (510), a radio transmitter (520) and a memory (530) storing a tag identity, wherein the processing device (510) is configured to transmit a radio signal via the radio transmitter (520), repeatedly at a regular time interval; wherein each radio signal comprises the tag identity, and
at least three receivers (120a, 120b, 120c), positioned at a respective predetermined position in the barn (200), each one configured to
receive the transmitted radio signal; and
communicate information related to the received radio signal with the positioning controller (130);
wherein the positioning controller (130) is configured to repeatedly:
obtain the information related to the received radio signals, received from the respective receivers (120a, 120b, 120c), for each tag identity;
calculate a set of position coordinates of the tag (110) comprising the respective tag identity based on the information related to the received radio signals of the radio transmitter (520) received by the receivers (120a, 120b, 120c);
provide data entities (301), each data entity (301) comprising the calculated position coordinates of the tag (110) associated with a timestamp and/ or an index number to the processing controller (150); and
wherein the processing controller (150) is configured to
determine distribution of time that an animal (101) associated with the tag (110) comprising the tag identity has spent in different zones (210, 220, 230) of the barn (200) by
associating each obtained data entity (301) with a respective zone (210, 220, 230) based on the position coordinates of the respective data entity (301) and the position coordinates of the zones (210, 220, 230);
counting the number of data entities (301) in each respective zone (210, 220, 230); and
calculating an amount of time the animal (101) has spent in each respective zone (210, 220, 230) by multiplying the number of data entities (301) associated with each respective zone (210, 220, 230) with the regular time interval, wherein the zones (210, 220, 230) comprises a feeding zone (210) dedicated for eating, a resting zone (220) dedicated for resting and a transportation zone (230) dedicated for walking wherein the tag (110) comprises an accelerometer (540); and wherein each data entity (301) comprises accelerometer data of the accelerometer (540); **characterized in that**
the processing controller (150) is configured to detect that the animal (100) is ruminating at position coordinates of any one of the obtained data entities (301), based on analysis of the accelerometer data of the data entity (301); and
in case the position coordinates of the data entity (301) are situated close to a limitation of the resting zone (220):
associating the data entity (301) of the animal (101) with the resting zone (220) when rumination is detected.

2. The system (100) according to claim 1, wherein the database (140) comprises historical distribution of time that the respective animal (101, 102, 103) has spent in different zones (210, 220, 230) of the barn (200); and wherein the processing controller (150) is configured to:
compare the determined distribution of time that the animal (101) has spent in different zones (210, 220, 230) with historical distribution of time that the respective animal (101, 102, 103) has spent in different zones (210, 220, 230), extracted from the database (140);
store the determined distribution of time that the animal (101) has spent in different zones (210, 220, 230) in the database (140); and
generate an alert when the deviation between the determined distribution of time and the historical distribution of time of the animal (101), based on the made comparison, exceeds a threshold limit.

3. The system (100) according to claim 2, wherein the historical distribution of time that the respective animal (101, 102, 103) has spent in different zones (210, 220, 230) of the barn (200) is stored associated with a time of the day when the distribution was determined; and wherein the processing controller (150) is configured to determine the time of the day when the distribution of time that the animal (101) has spent in different zones (210, 220, 230) is determined; and make the comparison with historical distribution of time the animal (101, 102, 103) has spent in different zones (210, 220, 230) at the corresponding time of the day.

4. The system (100) according to any one of claims 1-3, wherein the processing controller (150) is configured to:
define a cluster (470) of obtained data entities (301) having position coordinates within a distance limit and a timestamp and/ or index number within a time limit;
calculate position coordinates of a gravity point (480) of the defined cluster (470);
determine which zone (210, 220, 230) the position coordinates of the gravity point (480) is associated with; and
determine that all data entities (301) of the cluster (470) are associated with the zone (210, 220, 230) of the cluster gravity point (480).

5. The system (100) according to any one of claims 1-4, wherein the processing controller (150) is configured to determine zone association of the respective data entity (301) by applying a rolling average of the position coordinates of the preceding data entities (301) within a predetermined window length and associating all data entities (301) within the predetermined window length with the same zone (210, 220, 230).

6. The system (100) according to any one of claims 1-5, wherein the processing controller (150) is configured to:
compare the calculated time the animal (101) has spent in the transportation zone (230) with a heat time threshold limit; and
generate a heat alert for the animal (101) when the heat time threshold limit is exceeded.

7. The system (100) according to any one of claims 1-6, wherein the processing controller (150) is configured to:
compare the time the animal (101) has spent in the resting zone (220) with a passivity time threshold limit; and
generate an anomaly alert for the animal (101) when the passivity time threshold limit is exceeded.

8. The system (100) according to any one of claims 1-7, wherein the radio transmitter (520) is configured to transmit a radio signal in an Ultra-Wide Band.

9. The system (100) according to any one of claims 1-8, wherein at least one of the zones (210, 220, 230) is divided into sub-zones (310a, 310b, 320a, 320b, 320c, 320d, 320e, 320f, 320g, 330a, 330b), wherein the processing controller (150) is configured to:
compile the calculated amount of time each animal (101, 102, 103) has spent in each sub-zone (310a, 310b, 320a, 320b, 320c, 320d, 320e, 320f, 320g, 330a, 330b); and
detect a sub-zone (310a, 310b, 320a, 320b, 320c, 320d, 320e, 320f, 320g, 330a, 330b) which is used less than a threshold time, based on the compilation.

10. The system (100) according to claim 9, wherein the sub-zones (310a, 310b, 320a, 320b, 320c, 320d, 320e, 320f, 320g, 330a, 330b) comprises cubicles and/ or feeding stations.

11. The system (100) according to any one of claims 1-10, comprising an output device (160); and wherein the processing controller (150) is configured to:
output information concerning distribution of time that the animal (101) has spent in different zones (210, 220, 230) of the barn (200) on the output device (160).

12. The system (100) according to claim 11 when dependent on any one of claims 2, 6 or 7, wherein the processing controller (150) is configured to:
output the generated alert on the output.

## Patentansprüche

1. System (100) zum Bestimmen einer Verteilung von Zeit, die ein jeweiliges Tier (101, 102, 103) während eines zuvor bestimmten Zeitraums in unterschiedlichen Zonen (210, 220, 230) eines Stalls (200) verbracht hat, wobei das System (100) umfasst:
eine Verarbeitungssteuervorrichtung (150);
eine Datenbank (140), umfassend Positionskoordinaten der jeweiligen Zonen (210, 220, 230);
eine Positionierungssteuervorrichtung (130);
einen Satz von Tags (110), wobei jedes Tag (110) dem jeweiligen Tier (101, 102, 103) zugeordnet ist, wobei jedes Tag (110) eine Verarbeitungsvorrichtung (510), einen Funksender (520) und einen Speicher (530) umfasst, der eine Tag-Identität speichert, wobei die Verarbeitungsvorrichtung (510) konfiguriert ist, um über den Funksender (520) in einem regelmäßigen Zeitabstand ein Funksignal wiederholt zu senden; wobei jedes Funksignal die Tag-Identität umfasst, und
mindestens drei Empfänger (120a, 120b, 120c), die an einer jeweiligen zuvor bestimmten Position in dem Stall (200) positioniert sind, wobei jeder Empfänger konfiguriert ist zum
Empfangen des gesendeten Funksignals; und
Übermitteln von Informationen bezüglich des empfangenen Funksignals an die Positionierungssteuervorrichtung (130);
wobei die Positionierungssteuervorrichtung (130) konfiguriert ist zum wiederholten:
Erhalten der Informationen bezüglich den empfangenen Funksignalen, die von den jeweiligen Empfängern (120a, 120b, 120c) für jede Tag-Identität empfangen werden;
Berechnen eines Satzes von Positionskoordinaten des Tags (110), umfassend die jeweilige Tag-Identität, basierend auf den Informationen bezüglich der empfangenen Funksignale des Funksenders (520), die durch die Empfänger (120a, 120b, 120c) empfangen werden;
Bereitstellen von Datenentitäten (301), jede Datenentität (301) umfassend die berechneten Positionskoordinaten des Tags (110), die einem Zeitstempel und/oder einer Indexnummer zugeordnet sind, an die Verarbeitungssteuervorrichtung (150); und
wobei die Verarbeitungssteuervorrichtung (150) konfiguriert ist zum
Bestimmen der Verteilung von Zeit, die ein Tier (101), das dem Tag (110), umfassend die Tag-Identität, zugeordnet ist, in unterschiedlichen Zonen (210, 220, 230) des Stalls (200) verbracht hat, durch
Zuordnen jeder erhaltenen Datenentität (301) einer jeweiligen Zone (210, 220, 230) basierend auf den Positionskoordinaten der jeweiligen Datenentität (301) und den Positionskoordinaten der Zonen (210, 220, 230);
Zählen der Anzahl der Datenentitäten (301) in jeder jeweiligen Zone (210, 220, 230); und
Berechnen einer Menge an Zeit, die das Tier (101) in jeder jeweiligen Zone (210, 220, 230) verbracht hat, durch Multiplizieren der Anzahl von Datenentitäten (301), die jeder jeweiligen Zone (210, 220, 230) zugeordnet sind, mit dem regelmäßigen Zeitintervall, wobei die Zonen (210, 220, 230) eine Fütterungszone (210), die zum Fressen dient, eine Ruhezone (220), die zum Ausruhen dient, und eine Transportzone (230) umfassen, die zum Gehen dient, wobei das Tag (110) einen Beschleunigungsmesser (540) umfasst; und wobei jede Datenentität (301) Beschleunigungsdaten des Beschleunigungsmessers (540) umfasst; **dadurch gekennzeichnet, dass**
die Verarbeitungssteuervorrichtung (150) konfiguriert ist, um, basierend auf einer Analyse der Beschleunigungsdaten der Datenentität (301) zu erkennen, dass das Tier (100) an den Positionskoordinaten einer beliebigen der erhaltenen Datenentitäten (301) wiederkäut; und
falls die Positionskoordinaten der Datenentität (301) in der Nähe einer Begrenzung der Ruhezone (220) liegen:
Zuordnen der Datenentität (301) des Tiers (101) der Ruhezone (220), wenn das Wiederkäuen erkannt wird.

2. System (100) nach Anspruch 1, wobei die Datenbank (140) eine historische Verteilung von Zeit umfasst, die das jeweilige Tier (101, 102, 103) in unterschiedlichen Zonen (210, 220, 230) des Stalls (200) verbracht hat; und wobei die Verarbeitungssteuervorrichtung (150) konfiguriert ist zum:
Vergleichen der bestimmten Verteilung von Zeit, die das Tier (101) in unterschiedlichen Zonen (210, 220, 230) verbracht hat, mit der historischen Verteilung von Zeit, die das jeweilige Tier (101, 102, 103) in unterschiedlichen Zonen (210, 220, 230) verbracht hat, die aus der Datenbank (140) extrahiert wird;
Speichern der bestimmten Verteilung von Zeit, die das Tier (101) in unterschiedlichen Zonen (210, 220, 230) verbracht hat, in der Datenbank (140); und
Erzeugen einer Warnung, wenn die Abweichung zwischen der bestimmten Verteilung von Zeit und der historischen Verteilung von Zeit des Tiers (101), basierend auf dem durchgeführten Vergleich, einen Schwellenwert überschreitet.

3. System (100) nach Anspruch 2, wobei die historische Verteilung von Zeit, die das jeweilige Tier (101, 102, 103) in unterschiedlichen Zonen (210, 220, 230) des Stalls (200) verbracht hat, einer Tageszeit zugeordnet gespeichert wird, zu der die Verteilung bestimmt wurde; und wobei die Verarbeitungssteuervorrichtung (150) konfiguriert ist, um die Tageszeit zu bestimmen, zu der die Verteilung von Zeit bestimmt wird, die das Tier (101) in unterschiedlichen Zonen (210, 220, 230) verbracht hat; und Vergleichen mit der historischen Verteilung von Zeit, die das Tier (101, 102, 103) zu der entsprechenden Tageszeit in unterschiedlichen Zonen (210, 220, 230) verbracht hat.

4. System (100) nach einem der Ansprüche 1 bis 3, wobei die Verarbeitungssteuervorrichtung (150) konfiguriert ist zum:
Definieren eines Clusters (470) von erhaltenen Datenentitäten (301), die Positionskoordinaten innerhalb einer Entfernungsgrenze und einem Zeitstempel und/oder eine Indexnummer innerhalb einer Zeitgrenze aufweisen;
Berechnen der Positionskoordinaten eines Gravitationspunkts (480) des definierten Clusters (470);
Bestimmen, welcher Zone (210, 220, 230) die Positionskoordinaten des Schwerkraftpunkts (480) zugeordnet sind; und
Bestimmen, dass alle Datenentitäten (301) des Clusters (470) der Zone (210, 220, 230) des Cluster-Schwerpunkts (480) zugeordnet sind.

5. System (100) nach einem der Ansprüche 1 bis 4, wobei die Verarbeitungssteuervorrichtung (150) konfiguriert ist, um die Zonenzuordnung der jeweiligen Datenentität (301) durch Anwenden eines gleitenden Durchschnittswerts der Positionskoordinaten der vorstehenden Datenentitäten (301) innerhalb einer zuvor bestimmten Fensterlänge und Zuordnen aller Datenentitäten (301) innerhalb der zuvor bestimmten Fensterlänge der gleichen Zone (210, 220, 230) zu bestimmen.

6. System (100) nach einem der Ansprüche 1 bis 5, wobei die Verarbeitungssteuervorrichtung (150) konfiguriert ist zum:
Vergleichen der berechneten Zeit, die das Tier (101) in der Transportzone (230) verbracht hat, mit einem Brunstzeitschwellenwert; und
Erzeugen eines Brunstalarms für das Tier (101), wenn der Brunstzeitschwellenwert überschritten wird.

7. System (100) nach einem der Ansprüche 1 bis 6, wobei die Verarbeitungssteuervorrichtung (150) konfiguriert ist zum:
Vergleichen der Zeit, die das Tier (101) in der Ruhezone (220) verbracht hat, mit einem Passivitätszeitschwellenwert; und
Erzeugen eines Anomaliealarms für das Tier (101), wenn der Passivitätszeitschwellenwert überschritten wird.

8. System (100) nach einem der Ansprüche 1 bis 7, wobei der Funksender (520) konfiguriert ist, um ein Funksignal in einem Ultrabreitband zu übertragen.

9. System (100) nach einem der Ansprüche 1 bis 8, wobei mindestens eine der Zonen (210, 220, 230) in Unterzonen (310a, 310b, 320a, 320b, 320c, 320d, 320e, 320f, 320g, 330a, 330b) unterteilt ist, wobei die Verarbeitungssteuervorrichtung (150) konfiguriert ist zum:
Kompilieren der berechneten Menge an Zeit, die jedes Tier (101, 102, 103) in jeder Unterzone (310a, 310b, 320a, 320b, 320c, 320d, 320e, 320f, 320g, 330a, 330b) verbracht hat; und
Erkennen einer Unterzone (310a, 310b, 320a, 320b, 320c, 320d, 320e, 320f, 320g, 330a, 330b), die weniger als eine Schwellenzeit verwendet wird, basierend auf der Kompilation.

10. System (100) nach Anspruch 9, wobei die Unterzonen (310a, 310b, 320a, 320b, 320c, 320d, 320e, 320f, 320g, 330a, 330b) Liegeboxen und/oder Fütterungsstationen umfassen.

11. System (100) nach einem der Ansprüche 1 bis 10, umfassend eine Ausgabevorrichtung (160); und wobei die Verarbeitungssteuervorrichtung (150) konfiguriert ist zum:
Ausgeben von Informationen über die Verteilung von Zeit, die das Tier (101) in unterschiedlichen Zonen (210, 220, 230) des Stalls (200) verbracht hat, auf der Ausgabevorrichtung (160).

12. System (100) nach Anspruch 11 sofern abhängig von einem der Ansprüche 2, 6 oder 7, wobei die Verarbeitungssteuervorrichtung (150) konfiguriert ist zum:
Ausgeben des erzeugten Alarms auf der Ausgabe.

## Revendications

1. Système (100) permettant de déterminer la répartition du temps qu'un animal respectif (101, 102, 103) a passé dans différentes zones (210, 220, 230) d'une étable (200) pendant une période de temps prédéterminée, dans lequel le système (100) comprend :
un dispositif de commande de traitement (150) ;
une base de données (140), comprenant des coordonnées de position des zones respectives (210, 220, 230) ;
un dispositif de commande de positionnement (130) ;
un ensemble d'étiquettes (110), chaque étiquette (110) étant associée à l'animal respectif (101, 102, 103), dans lequel chaque étiquette (110) comprend un dispositif de traitement (510), un émetteur radio (520) et une mémoire (530) stockant une identité d'étiquette, dans lequel le dispositif de traitement (510) est configuré pour transmettre un signal radio par l'intermédiaire de l'émetteur radio (520), de manière répétée à un intervalle de temps régulier ; dans lequel chaque signal radio comprend l'identité d'étiquette, et
au moins trois récepteurs (120a, 120b, 120c), positionnés à une position prédéterminée respective dans l'étable (200), chacun étant configuré pour
recevoir le signal radio transmis ; et
communiquer des informations relatives au signal radio reçu avec le dispositif de commande de positionnement (130) ;
dans lequel le dispositif de commande de positionnement (130) est configuré pour, de manière répétée :
obtenir les informations relatives aux signaux radio reçus, reçus à partir des récepteurs respectifs (120a, 120b, 120c), pour chaque identité d'étiquette ;
calculer un ensemble de coordonnées de position de l'étiquette (110) comprenant l'identité d'étiquette respective sur la base des informations relatives aux signaux radio reçus de l'émetteur radio (520) reçues par les récepteurs (120a, 120b, 120c) ;
fournir des entités de données (301), chaque entité de données (301) comprenant les coordonnées de position calculées de l'étiquette (110) associées à un horodatage et/ou un indice au dispositif de commande de traitement (150) ; et
dans lequel le dispositif de commande de traitement (150) est configuré pour
déterminer la répartition du temps qu'un animal (101) associé à l'étiquette (110) comprenant l'identité d'étiquette a passé dans différentes zones (210, 220, 230) de l'étable (200) en
associant chaque entité de données (301) obtenue à une zone respective (210, 220, 230) sur la base des coordonnées de position de l'entité de données respective (301) et des coordonnées de position des zones (210, 220, 230) ;
comptant le nombre d'entités de données (301) dans chaque zone respective (210, 220, 230) ; et
calculant une quantité de temps que l'animal (101) a passée dans chaque zone respective (210, 220, 230) en multipliant le nombre d'entités de données (301) associées à chaque zone respective (210, 220, 230) par l'intervalle de temps régulier, dans lequel les zones (210, 220, 230) comprennent une zone d'alimentation (210) dédiée à l'alimentation, une zone de repos (220) dédiée au repos et une zone de transport (230) dédiée à la marche, dans lequel l'étiquette (110) comprend un accéléromètre (540) ; et dans lequel chaque entité de données (301) comprend des données d'accéléromètre de l'accéléromètre (540) ; **caractérisé en ce que**
le dispositif de commande de traitement (150) est configuré pour détecter que l'animal (100) rumine à des coordonnées de position de l'une quelconque des entités de données (301) obtenues, sur la base de l'analyse des données d'accéléromètre de l'entité de données (301) ; et
dans le cas où les coordonnées de position de l'entité de données (301) sont situées à proximité d'une délimitation de la zone de repos (220) :
associant l'entité de données (301) de l'animal (101) à la zone de repos (220) lorsque la rumination est détectée.

2. Système (100) selon la revendication 1, dans lequel la base de données (140) comprend une répartition historique du temps que l'animal respectif (101, 102, 103) a passé dans différentes zones (210, 220, 230) de l'étable (200) ; et dans lequel le dispositif de commande de traitement (150) est configuré pour :
comparer la répartition déterminée du temps que l'animal (101) a passé dans différentes zones (210, 220, 230) avec la répartition historique du temps que l'animal respectif (101, 102, 103) a passé dans différentes zones (210, 220, 230), extraite de la base de données (140) ;
stocker la répartition déterminée du temps que l'animal (101) a passé dans différentes zones (210, 220, 230) dans la base de données (140) ; et
générer une alerte lorsque l'écart entre la répartition du temps déterminée et la répartition historique du temps de l'animal (101), sur la base de la comparaison effectuée, dépasse une limite seuil.

3. Système (100) selon la revendication 2, dans lequel la répartition historique du temps que l'animal respectif (101, 102, 103) a passé dans différentes zones (210, 220, 230) de l'étable (200) est stockée en association avec une heure de la journée à laquelle la répartition a été déterminée ; et dans lequel le dispositif de commande de traitement (150) est configuré pour déterminer l'heure de la journée à laquelle la répartition du temps que l'animal (101) a passé dans différentes zones (210, 220, 230) est déterminée ; et effectuer la comparaison avec la répartition historique du temps que l'animal (101, 102, 103) a passé dans différentes zones (210, 220, 230) à l'heure de la journée correspondante.

4. Système (100) selon l'une quelconque des revendications 1 à 3, dans lequel le dispositif de commande de traitement (150) est configuré pour :
définir un groupe (470) d'entités de données (301) obtenues ayant des coordonnées de position dans une limite de distance et un horodatage et/ou un indice dans une limite de temps ;
calculer des coordonnées de position d'un point de gravité (480) du groupe défini (470) ;
déterminer à quelle zone (210, 220, 230) les coordonnées de position du point de gravité (480) sont associées ; et
déterminer que toutes les entités de données (301) du groupe (470) sont associées à la zone (210, 220, 230) du point de gravité de groupe (480).

5. Système (100) selon l'une quelconque des revendications 1 à 4, dans lequel le dispositif de commande de traitement (150) est configuré pour déterminer l'association de zone de l'entité de données respective (301) en appliquant une moyenne mobile des coordonnées de position des entités de données précédentes (301) dans une longueur de fenêtre prédéterminée et en associant toutes les entités de données (301) dans la longueur de fenêtre prédéterminée à la même zone (210, 220, 230).

6. Système (100) selon l'une quelconque des revendications 1 à 5, dans lequel le dispositif de commande de traitement (150) est configuré pour :
comparer le temps calculé que l'animal (101) a passé dans la zone de transport (230) avec une limite de seuil de temps de chaleur ; et
générer une alerte de chaleur pour l'animal (101) lorsque la limite de seuil de temps de chaleur est dépassée.

7. Système (100) selon l'une quelconque des revendications 1 à 6, dans lequel le dispositif de commande de traitement (150) est configuré pour :
comparer le temps que l'animal (101) a passé dans la zone de repos (220) avec une limite de seuil de temps de passivité ; et
générer une alerte d'anomalie pour l'animal (101) lorsque la limite de seuil de temps de passivité est dépassée.

8. Système (100) selon l'une quelconque des revendications 1 à 7, dans lequel l'émetteur radio (520) est configuré pour transmettre un signal radio dans une bande ultra-large.

9. Système (100) selon l'une quelconque des revendications 1 à 8, dans lequel au moins une des zones (210, 220, 230) est divisée en sous-zones (310a, 310b, 320a, 320b, 320c, 320d, 320e, 320f, 320g, 330a, 330b), dans lequel le dispositif de commande de traitement (150) est configuré pour :
compiler la quantité de temps calculée que chaque animal (101, 102, 103) a passée dans chaque sous-zone (310a, 310b, 320a, 320b, 320c, 320d, 320e, 320f, 320g, 330a, 330b) ; et
détecter une sous-zone (310a, 310b, 320a, 320b, 320c, 320d, 320e, 320f, 320g, 330a, 330b) qui est utilisée moins qu'un temps seuil, sur la base de la compilation.

10. Système (100) selon la revendication 9, dans lequel les sous-zones (310a, 310b, 320a, 320b, 320c, 320d, 320e, 320f, 320g, 330a, 330b) comprennent des box et/ou des postes d'alimentation.

11. Système (100) selon l'une quelconque des revendications 1 à 10, comprenant un dispositif de sortie (160) ; et dans lequel le dispositif de commande de traitement (150) est configuré pour :
produire des informations concernant la répartition du temps que l'animal (101) a passé dans différentes zones (210, 220, 230) de l'étable (200) sur le dispositif de sortie (160).

12. Système (100) selon la revendication 11 lorsqu'elle dépend de l'une quelconque des revendications 2, 6 ou 7, dans lequel le dispositif de commande de traitement (150) est configuré pour :
produire l'alerte générée sur la sortie.
